# FASCICULE DE BREVET EUROPEEN

(11) **EP 0 800 953 B1**
(45) Date de publication et mention de la délivrance du brevet: **20.10.1999**
(21) Numéro de dépôt: 97400485.5
(22) Date de dépôt: 03.03.1997
(51) Int. Cl.: B60N 2/16

(54) **Dispositif d'actionnement centralisé d'un siège de véhicule automobile**
Vorrichtung zur Verstellung von Kraftfahrzeugsitzen
Device for centrally adjusting vehicle seats

(30) Priorité: 12.04.1996 FR 9604621
(43) Date de publication de la demande: 15.10.1997
(73) Titulaire: CESA COMPAGNIE EUROPEENNE DE SIEGES POUR AUTOMOBILES, 92307 Levallois-Perret Cédex (FR)
(72) Inventeur: Fourrey, François, 45290 Nogent-sur-Vernisson (FR); Verien, Guy, 45290 Nogent-sur-Vernisson (FR)
(74) Mandataire: Moncheny, Michel

(56) Documents cités:
- DE-A- 4 240 943
- DE-U- 8 521 870
- FR-E- 86 839
- GB-A- 926 540

## Description

La présente invention concerne un dispositif d'actionnement centralisé de deux organes de commande locaux disposés sensiblement symétriquement de chaque côté d'un siège de véhicule automobile.

Les sièges de véhicule automobile sont équipés, de plus en plus fréquemment, de doubles dispositifs de réglage disposés symétriquement de chaque côté (gauche et droit) du siège.

Ces dispositifs permettent par exemple le réglage de l'inclinaison d'un dossier du siège, de la position longitudinale ou de la hauteur du siège.

Les doubles dispositifs de réglage permettent de résister de façon satisfaisante aux efforts mis en jeu aussi bien lors de l'utilisation normale du siège que lors d'une collision du véhicule.

Les doubles dispositifs de réglage sont généralement actionnés par un organe centralisé relié à deux organes de commande locaux de ces dispositifs. Les organes de commande sont disposés symétriquement de chaque côté du siège voir, par exemple, la première addition, numérotée 86 839, au brevet d'invention FR-A-1 265 340.

Habituellement, chaque organe de commande local forme un levier déplaçable entre une position de verrouillage du dispositif de réglage, vers laquelle il est rappelé élastiquement, et une position de déverrouillage de ce dispositif permettant le réglage souhaité.

De façon classique, l'organe d'actionnement centralisé est relié aux organes de commande locaux par des moyens de couplage relativement complexes comprenant notamment un arbre transversal de couplage s'étendant entre les dispositifs de réglage gauche et droit.

Généralement, l'organe d'actionnement centralisé est agencé sur un des côtés du siège si bien que, lorsqu'un effort est exercé sur cet organe d'actionnement, l'arbre de couplage subit une torsion produisant un décalage de commande des deux dispositifs de réglage. Ce décalage peut conduire à une impossibilité de déverrouillage du dispositif de réglage le plus éloigné de l'organe d'actionnement. Cet inconvénient est particulièrement gênant dans le cas de dispositifs de réglage de type discontinus.

L'invention a pour but de simplifier les moyens de couplage reliant l'organe d'actionnement centralisé aux deux organes de commande locaux disposés symétriquement de chaque côté du siège en assurant une synchronisation rigoureuse du déverrouillage des dispositifs de réglage gauche et droit.

A cet effet, l'invention a pour objet un dispositif d'actionnement centralisé de deux organes de commande locaux disposés sensiblement symétriquement de chaque côté d'un siège de véhicule automobile, du type comprenant un organe d'actionnement centralisé relié aux deux organes de commande locaux par des moyens de couplage, caractérisé en ce que les moyens de couplage comprennent un ensemble filiforme rigide en forme générale de U comportant deux branches sensiblement longitudinales et parallèles aux côtés du siège reliées par une âme sensiblement transversale, l'extrémité libre de chaque branche étant reliée à un organe de commande local correspondant, les extrémités rapprochées d'une première branche et de l'âme étant accrochées à l'organe d'actionnement, les extrémités rapprochées de la seconde branche et de l'âme étant reliées entre elles par un coude de renvoi plié suivant deux angles adjacents ayant pour côté commun un tronçon oblique de renvoi de l'ensemble filiforme, sensiblement rectiligne, l'organe d'actionnement étant déplaçable suivant une direction d'actionnement sensiblement parallèle au tronçon oblique de renvoi, le dispositif d'actionnement comprenant de plus des moyens de guidage du tronçon oblique de renvoi suivant une direction sensiblement parallèle à ce tronçon de renvoi.

Suivant d'autres caractéristiques de l'invention:
- le siège comprend une armature en forme générale de U, comprenant deux branches sensiblement longitudinales et parallèles aux côtés du siège reliées par deux coudes à une âme sensiblement transversale, l'organe d'actionnement étant porté par un premier coude de l'armature et les moyens de guidage étant portés par le second coude de l'armature ;
- l'armature a une forme générale tubulaire, les coudes de l'armature étant pliés chacun suivant deux angles adjacents ayant pour côté commun un tronçon oblique de l'armature, sensiblement rectiligne, la section transversale de ces tronçons obliques comportant une zone aplatie délimitée par deux parois planes sensiblement parallèles, l'une interne et l'autre externe à l'espace compris entre les branches de l'armature, un premier tronçon oblique de l'armature étant sensiblement perpendiculaire à la direction d'actionnement et portant l'organe d'actionnement, et le second tronçon oblique de l'armature étant sensiblement parallèle à la direction d'actionnement et portant les moyens de guidage ;
- les extrémités rapprochées de la première branche et de l'âme de l'ensemble filiforme sont reliées entre elles par un coude d'actionnement, et l'organe d'actionnement forme un levier coudé articulé sur le premier coude de l'armature, le coude d'actionnement étant accroché sur un coude du levier ;
- le levier est articulé sur un élément solidaire de la paroi plane interne du tronçon oblique du premier coude de l'armature, autour d'un axe sensiblement parallèle à ce tronçon ;
- les moyens de guidage sont ménagés dans le second coude de l'armature ;
- les moyens de guidage comprennent une partie de la zone aplatie du tronçon oblique du second coude de l'armature intermédiaire entre deux orifices de passage de l'ensemble filiforme ménagés à travers la zone aplatie, le tronçon oblique de renvoi de l'ensemble filiforme étant sensiblement parallèle à la partie intermédiaire est coulissant au contact de la paroi plane externe de cette partie ;
- la partie intermédiaire est prolongée par deux languettes sensiblement parallèles respectivement à l'âme et à la seconde branche de l'ensemble filiforme, ces languettes s'étendant vers l'espace compris entre les branches de l'armature ;
- le coude d'actionnement est plié suivant un angle sensiblement droit ;
- les angles adjacents des coudes de l'armature sont sensiblement égaux chacun à 135° ;
- les deux organes de commande locaux forment deux leviers articulés sur des éléments reliés aux extrémités libres des branches de l'armature ;
- l'armature est une armature d'assise du siège ;
- l'ensemble filiforme comporte un fil métallique du type corde à piano.

L'invention sera mieux comprise à la lecture de la description qui va suivre donnée uniquement à titre d'exemple et faite en se référant aux dessins annexés dans lesquels :
- la figure 1 est une vue schématique en coupe verticale longitudinale médiane d'un siège pour véhicule automobile muni d'un dispositif d'actionnement selon l'invention ;
- la figure 2 est une vue de dessus du siège de la figure 1 ;
- la figure 3 est une vue de détail, à échelle agrandie, de la partie cerclée 3 de la figure 2 ;
- la figure 4 est une vue suivant la flèche 4 de la figure 3 ;
- la figure 5 est une vue de détail, à échelle agrandie, de la partie cerclée 5 de la figure 2 ;
- la figure 6 est une vue suivant la flèche 6 de la figure 7 ;
- la figure 7 est une vue suivant la flèche 7 de la figure 5.

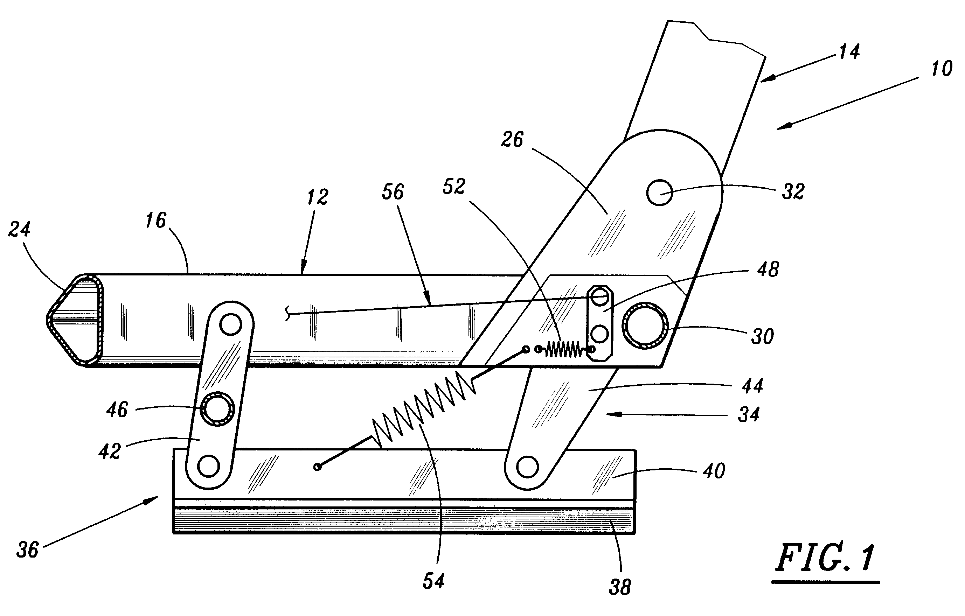

On a représenté de façon schématique sur la figure 1 un siège 10 pour véhicule automobile comprenant une armature d'assise 12 sensiblement horizontale et une armature de dossier 14.

Dans ce qui suit, les orientations gauche, droite, avant et arrière correspondent aux orientations habituelles d'un occupant assis dans le siège 10.

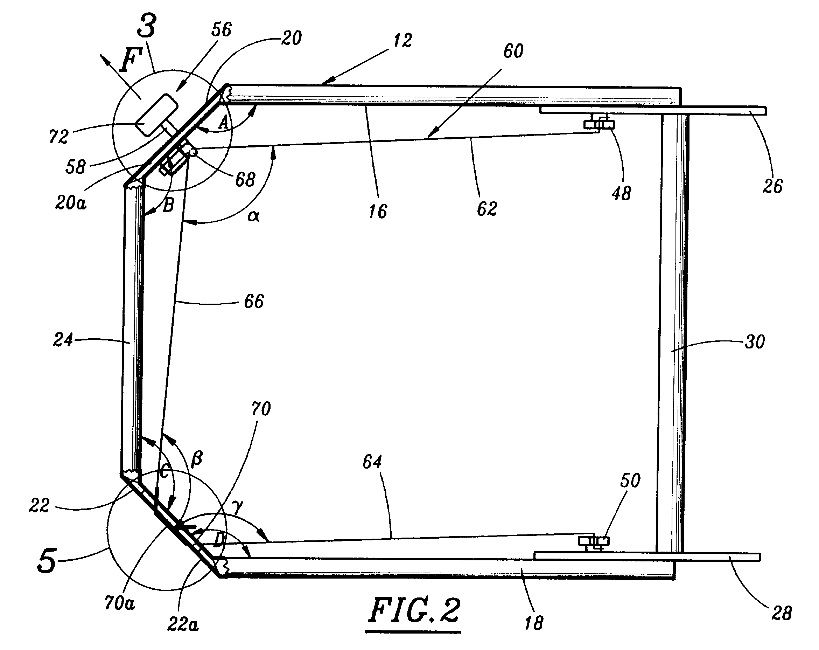

En se référant à la figure 2, on voit que l'armature d'assise 12 a une forme générale de U et comporte deux branches latérales 16,18, sensiblement longitudinales et parallèles aux côtés gauche et droit du siège, reliées, par deux coudes 20,22, à une âme 24 sensiblement transversale délimitant une extrémité avant de l'armature 12.

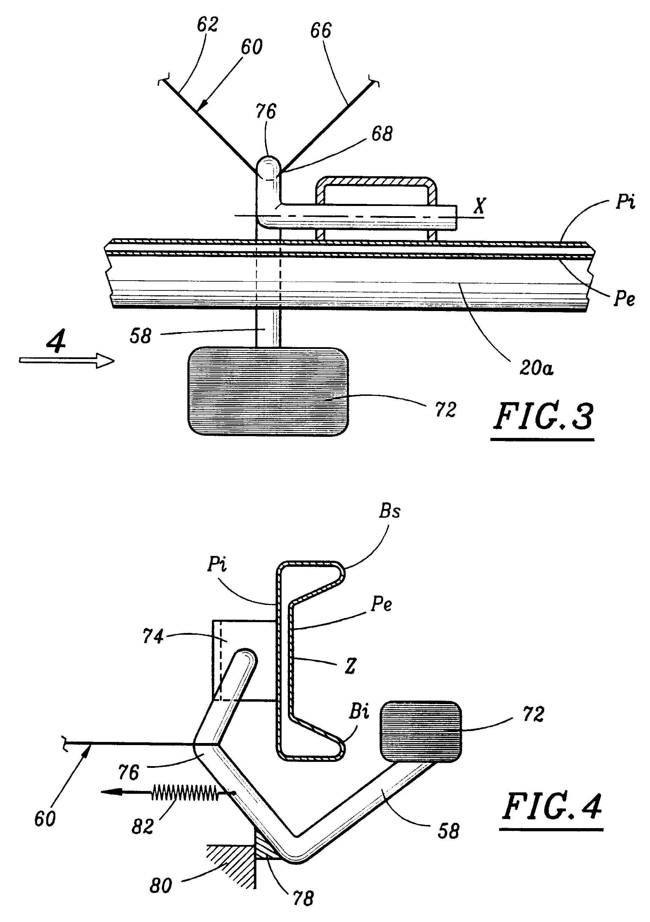

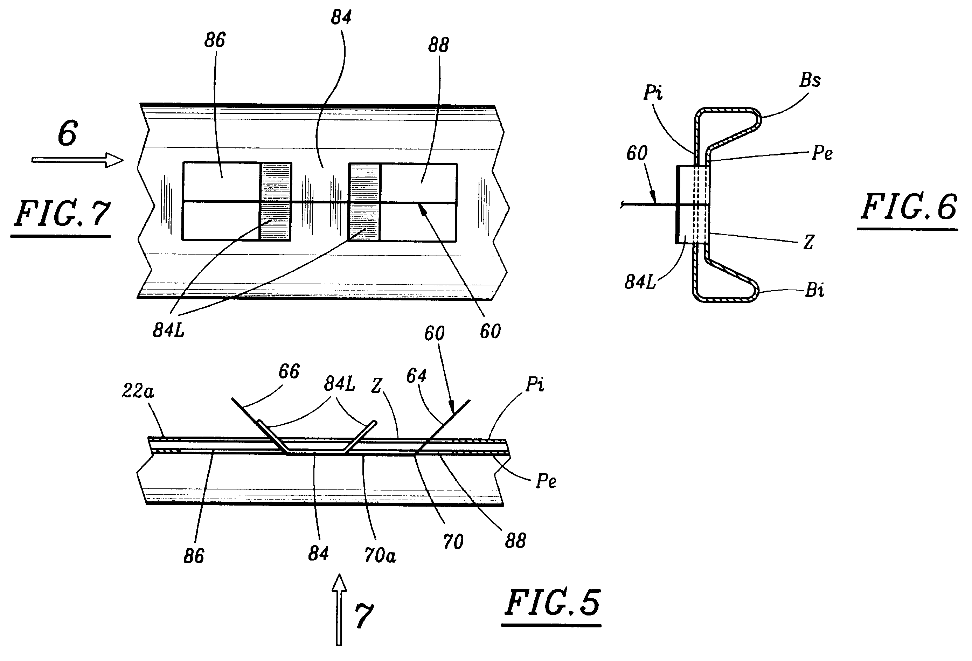

L'armature d'assise 12 a une forme générale tubulaire dont la section circulaire d'origine a été déformée de manière à obtenir par exemple une âme 24 de section transversale sensiblement triangulaire ainsi que des branches 16,18 et des coudes 20,22 de section transversale en forme générale de gouttière comme cela est représenté notamment sur les figures 4 et 7.

Les coudes 20,22 de l'armature d'assise 12 sont pliés chacun suivant deux angles adjacents A à D ayant pour côté commun un tronçon oblique 20a,22a de l'armature sensiblement rectiligne.

Dans l'exemple décrit, les angles A à D sont sensiblement égaux chacun à 135°, si bien que les tronçons obliques 20a,22a de ces coudes s'étendent sensiblement à 45° par rapport aux directions générales des branches 16,18 et de l'âme 24 de l'armature 12.

La section transversale des tronçons obliques 20a,22a comporte une zone centrale aplatie Z s'étendant entre deux bourrelets supérieur Bs et inférieur Bi. La zone aplatie Z est délimitée par deux parois planes sensiblement parallèles (verticales), respectivement interne Pi et externe Pe à l'espace compris entre les branches 16,18 de l'armature (voir notamment figures 4 et 6).

Les bourrelets Bs,Bi font saillie vers l'extérieur de l'espace compris entre les branches de l'armature.

Les extrémités libres des branches 16,18 sont munies de flasques 26,28 de liaison avec l'armature de dossier 14 et sont reliées entre elles par une entretoise transversale tubulaire 30.

L'armature de dossier 14 est articulée de façon connue en soi sur les flasques 26,28 autour d'un axe horizontal transversal matérialisé par une broche d'articulation 32.

L'armature d'assise 12 est reliée, par l'intermédiaire de moyens 34 de réglage en hauteur, à une paire d'ensembles de glissière classiques 36.

Chaque ensemble de glissière comprend un rail longitudinal fixe 38 dans lequel coulisse un rail longitudinal mobile 40.

Les moyens de réglage en hauteur 34 comprennent deux biellettes avant 42 et deux biellettes arrière 44 dont les extrémités sont articulées sur les deux branches 16,18 de l'armature d'assise 12 et sur les deux rails mobiles 40 des ensembles de glissière 36 de manière à former deux quadrilatères articulés gauche et droit.

Les deux biellettes avant 42 sont reliées entre elles par une entretoise transversale tubulaire 46.

Chaque biellette arrière 44 est reliée à un flasque correspondant 26,28 de l'armature d'assise par un dispositif de réglage, non représenté sur les figures, du type classique discontinu ou indexé.

Les deux dispositifs de réglage sont donc disposés sensiblement symétriquement de chaque côté gauche et droit du siège 10.

Les dispositifs de réglage sont commandés par deux organes locaux, formant leviers 48,50, articulés sur les deux flasques 26,28 correspondants.

De façon classique, chaque levier de commande 48,50 est déplaçable entre une position de verrouillage du dispositif de réglage et une position de déverrouillage de ce dispositif permettant le réglage souhaité.

Chaque levier de commande 48,50 est rappelé élastiquement vers sa position de verrouillage par un ressort 52 reliant une première extrémité du levier 48,50 au flasque correspondant.

Un ressort d'équilibrage 54, facilitant le réglage en hauteur du siège, relie un ensemble de glissière 36 à l'armature d'assise 12.

Les deux leviers de commande locaux 48,50, qui sont disposés sensiblement symétriquement de chaque côté du siège 10, sont actionnés au moyen d'un dispositif centralisé 56 selon l'invention.

Ce dispositif 56 comprend un organe d'actionnement centralisé, formant levier 58, relié aux deux leviers de commande 48,50 par des moyens de couplage comprenant un ensemble ou élément filiforme rigide 60 plié en U (voir notamment figures 2 à 4).

L'élément filiforme est, par exemple, un fil métallique du type corde à piano.

L'élément filiforme 60 comprend deux branches 62,64, sensiblement longitudinales et parallèles aux côtés du siège et aux branches 12,18 de l'armature d'assise, et une âme 66 sensiblement transversale. Les extrémités rapprochées de l'âme 66 et d'une première branche 62 sont reliées entre elles par un coude d'actionnement 68. Les extrémités rapprochées de l'âme 66 et de la seconde branche 64 sont reliées entre elles par un coude de renvoi 70.

Le coude d'actionnement 68 est plié suivant un angle α sensiblement droit.

Le coude de renvoi 70 est plié suivant deux angles adjacents β,γ ayant pour côté commun un tronçon oblique de renvoi 70a de l'élément filiforme, sensiblement rectiligne.

Dans l'exemple décrit, les angles α et β sont sensiblement égaux chacun à 135°.

L'extrémité libre de chaque branche 62,64 de l'élément filiforme est reliée à la seconde extrémité d'un levier de commande local 48,50 correspondant.

En se référant notamment aux figures 3 et 4, on voit que le levier d'actionnement 58 comprend une première extrémité munie d'une poignée de manoeuvre 72 et une seconde extrémité montée articulée sur un étrier 74, solidaire de la paroi plane interne Pi du tronçon oblique 20a de l'armature d'assise, autour d'un axe X sensiblement parallèle à ce tronçon 20a.

Le levier d'actionnement 58 est plié de manière à former au moins un coude 76 sur lequel est accroché le coude d'actionnement 68 de l'élément filiforme 60.

Le levier d'actionnement 58 est déplaçable, par pivotement autour de l'axe X, entre une position de verrouillage des dispositifs de réglage, telle que représentée à la figure 4, et une position de déverrouillage de ces dispositifs permettant d'effectuer le réglage souhaité.

La position de verrouillage du levier d'actionnement 58 est imposée par des butées complémentaires 78,80, solidaires l'une de ce levier 58 et l'autre de l'armature d'assise 12. Le levier d'actionnement 58 est rappelé élastiquement par un ressort 82 vers sa position de verrouillage.

Le levier d'actionnement 58 est déplaçable de sa position de verrouillage vers sa position de déverrouillage suivant une direction d'actionnement, représentée par une flèche F sur la figure 2, sensiblement parallèle au tronçon oblique de renvoi 70a de l'élément filiforme 60.

Sur les figures 5 à 7, on a représenté en détail des moyens de guidage du tronçon oblique de renvoi 70a suivant une direction sensiblement parallèle à ce tronçon 70a.

Les moyens de guidage comprennent une partie 84 de la zone aplatie Z du tronçon oblique 22a. Cette partie 84 est intermédiaire entre deux orifices 86,88 de passage de l'élément filiforme 60 ménagés à travers la zone Z.

Le tronçon oblique de renvoi 70a de l'élément filiforme est sensiblement parallèle à la partie intermédiaire 84 et, lorsque le levier 58 est actionné, coulisse par effet de rampe au contact de la paroi plane externe de la partie intermédiaire 84.

La partie intermédiaire 84 est prolongée par deux languettes 84L sensiblement parallèles, respectivement, à l'âme 66 et à la branche 64 de l'élément filiforme. Ces languettes 84L s'étendent vers l'espace compris entre les branches 16,18 de l'armature d'assise.

Les orifices de passage 84,86 sont réalisés, par exemple, par poinçonnage de la zone aplatie Z, les languettes 84L étant réalisées par emboutissage avec effet de cisaillage de cette zone aplatie.

On notera que la longueur de la partie intermédiaire 84 entre les languettes 84L est inférieure à la longueur du tronçon oblique 70a de l'élément filiforme pour tenir compte de la course de coulissement de ce tronçon 70a lorsque le levier 58 est actionné.

On notera également que le tronçon oblique 20a de l'armature, portant le levier 58, est sensiblement perpendiculaire à la direction d'actionnement F et que le tronçon oblique 22a de l'armature, portant les moyens de guidage 84,84C, est sensiblement parallèle à cette direction F.

Pour régler la hauteur du siège, on soulève la poignée 72 du levier d'actionnement 58 ce qui a pour effet de tirer les deux branches 62,64 de l'élément filiforme par l'intermédiaire du coude 76 du levier d'actionnement.

Compte tenu de la disposition géométrique décrite plus haut, les tractions exercées sur les deux branches 62,64 ainsi que les déplacements de ces branches sont sensiblement égaux. Les leviers de commande locaux 48,50 sont donc déplacés simultanément ce qui a pour effet de provoquer un déverrouillage synchronisé des dispositifs de réglage permettant de réaliser le réglage souhaité.

L'invention ne se limite pas au mode de réalisation décrit précédemment.

En particulier, l'invention peut s'appliquer à des dispositifs de réglage variés, permettant, par exemple, de régler l'inclinaison du dossier du siège ou la position longitudinale de ce siège.

Par ailleurs, dans le cadre de l'invention, l'ensemble ou l'élément filiforme peut être constitué de deux parties séparées filiformes, une première partie rectiligne formant la première branche 62 de l'ensemble filiforme, et une seconde partie coudée formant la seconde branche 64 et l'âme 66 de l'ensemble filiforme.

Dans ce cas, les extrémités rapprochées de la branche 62 de la première partie et de l'âme 66 de la seconde partie sont accrochées indépendamment l'une de l'autre, par des moyens classiques, à l'organe d'actionnement 58.

Enfin, il faut comprendre par élément filiforme rigide un élément dont la forme générale après pliage reste sensiblement inchangée au cours du fonctionnement du dispositif d'actionnement selon l'invention, mais qui présente une flexibilité suffisante pour permettre, lors de ce fonctionnement, une légère déformation élastique des angles formés par les coudes de cet élément.

L'invention comporte de nombreux avantages.

En particulier, elle permet d'actionner, à l'aide d'un seul organe centralisé, deux dispositifs de réglage disposés sensiblement symétriquement de chaque côté du siège, ceci en assurant une synchronisation rigoureuse du déverrouillage des dispositifs de réglage.

## Revendications

1. Dispositif d'actionnement centralisé de deux organes de commande locaux (48,50) disposés sensiblement symétriquement de chaque côté d'un siège (10) de véhicule automobile, du type comprenant un organe d'actionnement centralisé (58) relié aux deux organes de commande locaux (48,50) par des moyens de couplage, caractérisé en ce que les moyens de couplage comprennent un ensemble filiforme rigide (60) en forme générale de U comportant deux branches (62,64) sensiblement longitudinales et parallèles aux côtés du siège reliées par une âme (66) sensiblement transversale, l'extrémité libre de chaque branche (62,64) étant reliée à un organe de commande local (48,50) correspondant, les extrémités rapprochées d'une première branche (62) et de l'âme (66) étant accrochées à l'organe d'actionnement (58), les extrémités rapprochées de la seconde branche (64) et de l'âme (66) étant reliées entre elles par un coude de renvoi (70) plié suivant deux angles adjacents (β,γ) ayant pour côté commun un tronçon oblique de renvoi (70a) de l'ensemble filiforme, sensiblement rectiligne, l'organe d'actionnement (58) étant déplaçable suivant une direction d'actionnement (F) sensiblement parallèle au tronçon oblique de renvoi (70a), le dispositif d'actionnement comprenant de plus des moyens de guidage (84,84L) du tronçon oblique de renvoi (70a) suivant une direction sensiblement parallèle à ce tronçon de renvoi (70a).

2. Dispositif selon la revendication 1, caractérisé en ce que le siège comprend une armature (12) en forme générale de U, comprenant deux branches (16,18) sensiblement longitudinales et parallèles aux côtés du siège reliées par deux coudes (20,22) à une âme (24) sensiblement transversale, l'organe d'actionnement (58) étant porté par un premier coude (20) de l'armature et les moyens de guidage (84,84L) étant portés par le second coude (22) de l'armature (12).

3. Dispositif selon la revendication 2, caractérisé en ce que l'armature (12) a une forme générale tubulaire, les coudes (20,22) de l'armature étant pliés chacun suivant deux angles adjacents (A à D) ayant pour côté commun un tronçon oblique (20a,22a) de l'armature, sensiblement rectiligne, la section transversale de ces tronçons obliques (20a,22a) comportant une zone aplatie (Z) délimitée par deux parois planes sensiblement parallèles, l'une interne (Pi) et l'autre externe (Pe) à l'espace compris entre les branches (16,18) de l'armature, un premier tronçon oblique (20a) de l'armature étant sensiblement perpendiculaire à la direction d'actionnement (F) et portant l'organe d'actionnement (58), et le second tronçon oblique (22a) de l'armature étant sensiblement parallèle à la direction d'actionnement (F) et portant les moyens de guidage (84,84L).

4. Dispositif selon la revendication 2 ou 3, caractérisé en ce que les extrémités rapprochées de la première branche (62) et de l'âme (66) de l'ensemble filiforme sont reliées entre elles par un coude d'actionnement (68), et en ce que l'organe d'actionnement forme un levier coudé (58) articulé sur le premier coude (20) de l'armature, le coude d'actionnement (68) étant accroché sur un coude (76) du levier (58).

5. Dispositif selon les revendications 3 et 4 prises ensemble, caractérisé en ce que le levier (58) est articulé sur un élément (91) solidaire de la paroi plane interne (Pi) du tronçon oblique (20a) du premier coude de l'armature (12), autour d'un axe (X) sensiblement parallèle à ce tronçon (20a).

6. Dispositif selon l'une quelconque des revendications 2 à 5, caractérisé en ce que les moyens de guidage (84,84L) sont ménagés dans le second coude (22) de l'armature (12).

7. Dispositif selon les revendications 3 et 6 prises ensemble, caractérisé en ce que les moyens de guidage comprennent une partie (84) de la zone aplatie (Z) du tronçon oblique (22a) du second coude de l'armature (12) intermédiaire entre deux orifices (86,88) de passage de l'ensemble filiforme ménagés à travers la zone aplatie (Z), le tronçon oblique de renvoi (70) de l'ensemble filiforme étant sensiblement parallèle à la partie intermédiaire (84) est coulissant au contact de la paroi plane externe (Pe) de cette partie (84).

8. Dispositif selon la revendication 7, caractérisé en ce que la partie intermédiaire (84) est prolongée par deux languettes (84L) sensiblement parallèles respectivement à l'âme (66) et à la seconde branche (64) de l'ensemble filiforme, ces languettes (84L) s'étendant vers l'espace compris entre les branches (16,18) de l'armature.

9. Dispositif selon l'une quelconque des revendications 4 à 8, caractérisé en ce que le coude d'actionnement (68) est plié suivant un angle (α) sensiblement droit.

10. Dispositif selon l'une quelconque des revendications 3 à 9, caractérisé en ce que les angles adjacents (A à D) des coudes (20,22) de l'armature sont sensiblement égaux chacun à 135°.

11. Dispositif selon l'une quelconque des revendications 2 à 10, caractérisé en ce que les deux organes de commande locaux forment deux leviers (48,50) articulés sur des éléments (26) reliés aux extrémités libres des branches (16,18) de l'armature (12).

12. Dispositif selon l'une quelconque des revendications 2 à 11, caractérisé en ce que l'armature (12) est une armature d'assise du siège.

13. Dispositif selon l'une quelconque des revendications précédentes, caractérisé en ce que l'ensemble filiforme (60) comporte un fil métallique du type corde à piano.

## Claims

1. Centralised device for the operation of two local control members (48, 50), which are arranged substantially symmetrically on each side of a motor vehicle seat (10), of the type comprising a centralised operating member (58) connected to the two local control members (48, 50) by coupling means, characterised in that the coupling means comprise a rigid filiform assembly (60) which is generally U-shaped and which comprises two branches (62, 64) which are substantially longitudinal and parallel with the sides of the seat and which are connected by a web (66) which is substantially transverse, the free end of each branch (62, 64) being connected to a corresponding local control member (48, 50), the brought-together ends of a first branch (62) and of the web (66) being attached to the operating member (58), the brought-together ends of the second branch (64) and of the web (66) being connected to one another by a double bend (70) which is bent through two adjacent angles (β, γ) having, as a common side, an oblique connection portion (70a) of the filiform assembly, which is substantially rectilinear, the operating member (58) being displaceable in an operating direction (F) which is substantially parallel with the oblique connection portion (70a), the operating device further comprising means (84, 84L) for guiding the oblique connection portion (70a) in a direction which is substantially parallel with that connection portion (70a).

2. Device according to claim 1, characterised in that the seat comprises a frame (12) which is generally U-shaped and comprises two branches (16, 18) which are substantially longitudinal and parallel with the sides of the seat and which are connected by two elbows (20, 22) to a substantially transverse web (24), the operating member (50) being carried by a first elbow (20) of the frame and the guiding means (84, 84L) being carried by the second elbow (22) of the frame (12).

3. Device according to claim 2, characterised in that the frame (12) has a general tubular shape, the elbows (20, 22) of the frame each being bent through two adjacent angles (A to D) which have, as a common side, an oblique portion (20a, 22a) of the frame, which is substantially rectilinear, the transverse portion of those oblique portions (20a, 22a) comprising a flattened region (Z) which is delimited by two flat walls, one internal (Pi) and the other external (Pe), which are substantially parallel with the space contained between the branches (16, 18) of the frame, a first oblique portion (20a) of the frame being substantially perpendicular to the operating direction (F) and carrying the operating member (58), and the second oblique portion (22a) of the frame being substantially parallel with the operating direction (F) and carrying the guiding means (84, 84L).

4. Device according to claim 2 or 3, characterised in that the brought-together ends of the first branch (62) and of the web (66) of the filiform assembly are connected to one another by an operating elbow (68), and in that the operating member forms a bent lever (58) which is articulated to the first elbow (20) of the frame, the operating elbow (68) being attached to an elbow (76) of the lever (58).

5. Device according to claims 3 and 4 taken together, characterised in that the lever (58) is articulated to an element (91) which is integral with the flat internal wall (Pi) of the oblique portion (20a) of the first elbow of the frame (12), about an axis (X) which is substantially parallel with that portion (20a).

6. Device according to any one of claims 2 to 5, characterised in that the guiding means (84, 84L) are arranged in the second elbow (22) of the frame (12).

7. Device according to claims 3 and 6 taken together, characterised in that the guiding means comprise a portion (84) of the flattened region (Z) of the oblique portion (22a) of the second elbow of the frame (12), which portion 84 is intermediate two through-holes (86, 88) of the filiform assembly which are provided through the flattened region (Z), the oblique connection portion (70) of the filiform assembly being substantially parallel with the intermediate portion (84) and sliding on contact with the flat external wall (Pe) of that portion (84).

8. Device according to claim 7, characterised in that the intermediate portion (84) is extended by two tongues (84L) which are substantially parallel with the web (66) and the second branch (64) of the filiform assembly, respectively, those tongues (84L) extending towards the space contained between the branches (16, 18) of the frame.

9. Device according to any one of claims 4 to 8, characterised in that the operating elbow (68) is bent through substantially a right-angle (α).

10. Device according to any one of claims 3 to 9, characterised in that the adjacent angles (A to D) of the elbows (20, 22) of the frame are each substantially in the order of 135°.

11. Device according to any one of claims 2 to 10, characterised in that the two local control members form two levers (40, 50) which are articulated to elements (26) which are connected to the free ends of the branches (16, 18) of the frame (12).

12. Device according to any one of claims 2 to 11, characterised in that the frame (12) is a seat base frame.

13. Device according to any one of the preceding claims, characterised in that the filiform assembly (60) comprises a metal wire of the piano-wire type.

## Patentansprüche

1. Zentrale Vorrichtung zur Betätigung von zwei lokalen Steuerelementen (48, 50), die im wesentlichen symmetrisch beiderseits eines Kraftfahrzeugsitzes (10) angeordnet sind, bestehend aus einem zentralen Betätigungselement (58), das mit den beiden lokalen Steuerelementen (48, 50) durch Kupplungsmittel verbunden ist, dadurch gekennzeichnet, daß die Kupplungsmittel eine drahtförmige starre Einheit (60) allgemeiner U-Form umfassen, die zwei im wesentlichen längs ausgerichtete und zu den Seiten des Sitzes parallele Schenkel (62, 64) umfaßt, die durch eine im wesentlichen querliegende Ader (66) verbunden sind, wobei das freie Ende jedes Schenkels (62, 64) mit einem entsprechenden lokalen Steuerelement (48, 50) verbunden ist, wobei die nahe zueinander liegenden Enden eines ersten Schenkels (62) und der Ader (66) an dem Betätigungselement (58) befestigt sind, wobei die nahe zueinander liegenden Enden des zweiten Schenkels (64) und der Ader (66) miteinander durch einen Doppelkrümmer (70) verbunden sind, der entlang zweier aneinandergrenzender Winkel (β, γ) gebogen ist, die als gemeinsame Seite einen schrägen, im wesentlichen geradlinigen Abschnitt (70a) zur Umkehr der drahtförmigen Einheit aufweisen, wobei das Betätigungselement (58) entlang einer im wesentlichen zu dem schrägen Umkehrabschnitt (70a) parallelen Richtung (F) verschiebbar ist, wobei die Betätigungsvorrichtung ferner Mittel zur Führung (84, 84L) des schrägen Umkehrabschnitts (70a) entlang einer im wesentlichen zu diesem Umkehrabschnitt (70a) parallelen Richtung umfaßt.

2. Vorrichtung nach Anspruch 1, dadurch gekennzeichnet, daß der Sitz einen Beschlag (12) allgemeiner U-Form umfaßt, bestehend aus zwei im wesentlichen längs angeordneten und zu den Seiten des Sitzes parallelen Schenkeln (16, 18), die durch zwei Krümmer (20, 22) mit einer im wesentlichen querliegenden Ader (24) verbunden sind, wobei das Betätigungselement (58) von einem ersten Krümmer (20) des Beschlags und die Führungsmittel (84, 84L) von dem zweiten Krümmer (22) des Beschlags (12) getragen werden.

3. Vorrichtung nach Anspruch 2, dadurch gekennzeichnet, daß der Beschlag (12) eine allgemeine Röhrenform aufweist, wobei die Krümmer (20, 22) des Beschlags jeweils entlang zweier aneinandergrenzender Winkel (A bis D) gebogen sind, die als gemeinsame Seite einen schrägen Abschnitt (20a, 22a) des Beschlags aufweisen, der im wesentlichen geradlinig ist, wobei der Querschnitt dieser schrägen Abschnitte (20a, 22a) einen abgeflachten Bereich (Z) umfaßt, der durch zwei im wesentlichen parallele flache Wandungen begrenzt ist, die eine innerhalb (Pi) und die andere außerhalb (Pe) des von den Schenkeln (16, 18) des Beschlags begrenzten Raumes, wobei ein erster schräger Abschnitt (20a) des Beschlags im wesentlichen auf die Betätigungsrichtung (F) senkrecht steht und das Betätigungselement (58) trägt, und wobei der zweite schräge Abschnitt des Beschlags im wesentlichen zu der Betätigungsrichtung (F) parallel ist und die Führungsmittel (84, 84L) trägt.

4. Vorrichtung nach Anspruch 2 oder 3, dadurch gekennzeichnet, daß die einander nahe liegenden Enden des ersten Schenkels (62) und der Ader (66) der drahtförmigen Einheit miteinander durch einen Betätigungskrümmer (68) verbunden sind, und daß das Betätigungselement einen gekrümmten Hebel (58) bildet, der auf dem ersten Krümmer (20) des Beschlags gelenkig montiert ist, wobei der Betätigungskrümmer (68) auf einem Krümmer (76) des Hebels (58) befestigt ist.

5. Vorrichtung nach den Ansprüchen 3 und 4 gemeinsam, dadurch gekennzeichnet, daß der Hebel (58) auf einem Element (91), das mit der flachen inneren Wandung (Pi) des schrägen Abschnittes (20a) des ersten Krümmers des Beschlags (12) verbunden ist, um eine im wesentlichen zu diesem Abschnitt (20a) parallele Achse (X) gelenkig befestigt ist.

6. Vorrichtung nach einem der Ansprüche 2 bis 5, dadurch gekennzeichnet, daß die Führungsmittel (84, 84L) in dem zweiten Krümmer (22) des Beschlags (12) vorgesehen sind.

7. Vorrichtung nach den Ansprüchen 3 und 6 gemeinsam, dadurch gekennzeichnet, daß die Führungsmittel einen Teil (84) des abgeflachten Bereichs (Z) des schrägen Abschnittes (22a) des zweiten Krümmers des Zwischenbeschlags (12) zwischen zwei Durchgangsöffnungen (86, 88) der drahtförmigen Einheit umfassen, die in dem abgeflachten Bereich (Z) vorgesehen sind, wobei der schräge Umkehrabschnitt (70) der drahtförmigen Einheit, der im wesentlichen zu dem Zwischenteil (84) parallel ist, in Berührung mit der flachen Außenwandung (Pe) dieses Teils (84) gleitet.

8. Vorrichtung nach Anspruch 7, dadurch gekennzeichnet, daß der Zwischenteil (84) durch zwei Streifen (84L) verlängert ist, die im wesentlichen zu der Ader (66) bzw. dem zweiten Schenkel (64) der drahtförmigen Einheit parallel sind, wobei sich diese Streifen (84L) zu dem Raum hin erstrecken, der sich zwischen den Schenkeln (16, 18) des Beschlags befindet.

9. Vorrichtung nach einem der Ansprüche 4 bis 8, dadurch gekennzeichnet, daß der Betätigungskrümmer (68) entlang eines im wesentlichen rechten Winkels (α) gebogen ist.

10. Vorrichtung nach einem der Ansprüche 3 bis 9, dadurch gekennzeichnet, daß die aneinandergrenzenden Winkel (A bis D) der Krümmer (20, 22) des Beschlags im wesentlichen jeweils gleich 135° sind.

11. Vorrichtung nach einem der Ansprüche 2 bis 10, dadurch gekennzeichnet, daß die beiden lokalen Steuerelemente zwei Hebel (48, 50) bilden, die auf Elementen (26) gelenkig montiert sind, die mit den freien Enden der Schenkel (16, 18) des Beschlags (12) verbunden sind.

12. Vorrichtung nach einem der Ansprüche 2 bis 11, dadurch gekennzeichnet, daß der Beschlag (12) ein Sitzflächenbeschlag des Sitzes ist.

13. Vorrichtung nach einem der vorhergehenden Ansprüche, dadurch gekennzeichnet, daß die drahtförmige Einheit (60) einen Metalldraht vom Typ Stahlsaite umfaßt.
